# EUROPEAN PATENT APPLICATION

(11) **EP 2 293 609 A1**
(43) Date of publication of application: **09.03.2011**
(21) Application number: 08874586.4
(22) Date of filing: 31.12.2008
(51) Int. Cl.: H04W 12/04

(54) **METHOD AND SYSTEM FOR GENERATING KEYS**

(30) Priority: 12.06.2008 CN 200810110667
(71) Applicant: ZTE Corporation, Shenzhen, Guangdong 518057 (CN)
(72) Inventor: GAN, Lu, Shenzhen Guangdong 518057 (CN)
(74) Representative: Wihlsson, Joakim Per Magnus
(86) International application number: PCT/CN2008/002155
(87) International publication number: WO 2009/149594

(57) **Abstract**

A method for deriving keys is disclosed. When Handover or Routing Area Update of User Equipment (UE) from an Evolved Universal Terrestrial Radio Access Network (E-UTRAN) to a Universal Terrestrial Radio Access Network (UTRAN) or Global System for Mobile Communication/Enhanced Data Rate for GSM Evolution Radio Access Network (GERAN) occurs, the keys for the UTRAN or the GERAN are derived by a Mobility Management Entity (MME) and/or the UE by using predefined parameters. The predefined parameters include a root key of the E-UTEAN and a value of a Non Access Stratum (NAS) Count. A keys derivation system for deriving the keys is also disclosed.

## Description

### TECHNICAL FIELD

The present invention relates to a key derivation technology in the communication field, particularly to a method and system for deriving keys during transfer between different systems.

### BACKGROUND

An Evolved Packet System (EPS) of 3rd Generation Partnership Project (3GPP) consists of an Evolved Universal Terrestrial Radio Access Network (E-UTRAN) and an Evolved Packet Core network (EPC) of the EPS. Base station equipment in the E-UTRAN is an evolved Node B (eNB). The EPC can support the access of users from a GSM/EDGE Radio Access Network, i.e. Global System for Mobile Communication/Enhanced Data Rate for GSM Evolution Radio Access Network (GERAN) and a Universal Terrestrial Radio Access Network (UTRAN).

Equipment responsible for management of mobility context and/or management of user security mode in a 3GPP Universal Mobile Telecommunication System (UMTS) and a General Packet Radio Service system (GPRS) is a Serving General Packet Radio Service Support Node (SGSN). The SGSN is also responsible for User Equipment (UE) authentication. A radio access network of the UMTS is a UTRAN. A radio access network of the GPRS is a GERAN. Base station equipment in the UTRAN is a Node B. Base station equipment in the GERAN is a Base Station System (BSS).

An EPC includes a Mobility Management Entity (MME). The MME is responsible for management of mobility, processing of Non Access Stratum (NAS) signaling, management of user security mode and the like relating to a control plane. The MME saves a root key of an E-UTRAN, i.e. Key Access Security Management Entity (K_{ASME}). Keys used by a UTRAN are an Integrity Key (IK) and a Confidentiality Key (CK). A key used by a GERAN is a Confidentiality Key (Kc) derived based on an IK and a CK. The UTRAN or the GERAN uses a CK or a Kc to derive keystream and encrypt messages.

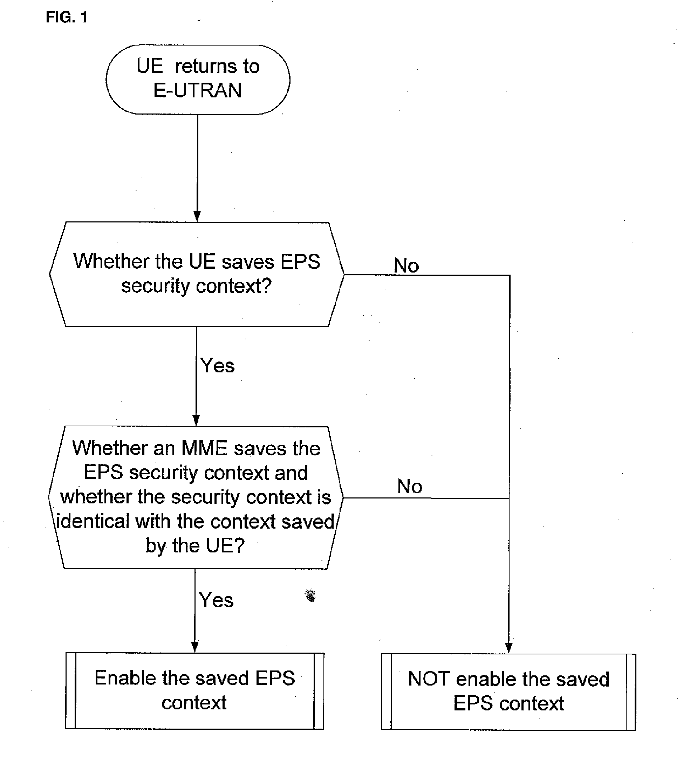

When UE transfers ("transfer" refers to Handover or Routing Area Update) from an E-UTRAN to a UTRAN or a GERAN, an MME is required to use K_{ASME} to derive an IK and a CK for the use of the UTRAN or the GERAN. Later on, if the UE transfers from the UTRAN or the GERAN to the E-UTRAN, the UE and the MME may use the same K_{ASME} used before the first transfer. FIG. 1 is a flow chart illustrating that E-UTRAN security context is enabled when UE transfers from an E-UTRAN to a UTRAN or a GERAN and then returns to the E-UTRAN from the UTRAN or the GERAN. Nevertheless, as an NAS uplink Count as well as a Key evolved Node B (KeNB) may change, there will be no problem with NAS protection and Access Stratum (AS) protection.

At present, when the UE transfers between different access systems, if the UE transfers again after the foregoing process, i.e. the UE transfers from the E-UTRAN to the UTRAN or the GERAN again, at least the following defects may exist:
when the UE transfers from the E-UTRAN to the UTRAN or the GERAN, although an IK and a CK can be derived for the UTRAN or the GERAN, it is highly likely that the same IK and CK in the UTRAN and the GERAN may result in the same keystream, thereby making a series of replay attacks possible. Therefore, a serious potential safety hazard exists.

### SUMMARY

The present invention intends to tackle the defect of the prior art that the same IK and CK are derived when transfer occurs between different access systems, and to provide a method and system for deriving keys, thus enhancing security.

In order to solve the foregoing problem, the present invention provides a method for deriving keys. When Handover or Routing Area Update of User Equipment (UE) from an Evolved Universal Terrestrial Radio Access Network (E-UTRAN) to a Universal Terrestrial Radio Access Network (UTRAN) or a Global System for Mobile Communication/Enhanced Data Rate for GSM Evolution Radio Access Network (GERAN), keys for the UTRAN or the GERAN are derived by a Mobility Management Entity (MME) and /or the UE by using predefined parameters. The predefined parameters include a root key of the E-UTEAN and a value of a Non Access Stratum (NAS) Count.

Further, the foregoing method may also have the following characteristics: the NAS Count is an NAS uplink Count or an NAS downlink Count.

Further, the foregoing method may also have the following characteristics: when Handover or Routing Area Update of the UE from the E-UTRAN to the UTRAN occurs, the derived keys include an Integrity Key (IK) and a Confidentiality Key (CK); and when Handover or Routing Area Update of the UE from the E-UTRAN to the GERAN occurs, the derived keys include an IK and a CK, and further, a Confidentiality Key (Kc) is derived based on the derived IK and CK, and the root key of the E-UTEAN is Key Access Security Management Entity (K_{ASME}).

Further, the foregoing method may also have the following characteristics: when keys are derived, the predefined parameters are input into a one-way key derivation function, and the output of the one-way key derivation function is taken as the keys.

Further, the foregoing method may also have the following characteristics: when Handover of the UE from the E-UTRAN to the UTRAN or the GERAN occurs, the MME derives keys using the predefined parameters after receiving a handover request, and/or, the UE derives keys using the predefined parameters after receiving a handover command for handover from the E-UTRAN.

Further, the foregoing method may also have the following characteristics: when Routing Area Update of the UE from the E-UTRAN to the UTRAN or the GERAN occurs, the following steps may be executed:
the UE derives keys using the predefined parameters; and/or,
the MME receives a Routing Area Update request from the UE and then derives keys using the predefined parameters.

The present invention also provides a system for deriving keys, which comprises a key derivation module for deriving keys by using predefined parameters, and the predefined parameters include a root key of an E-UTEAN (K_{ASME}) and a value of an NAS Count.

Further, the foregoing system may also have the following characteristics: the key derivation module is located in UE and/or an MME, and when Handover or Routing Area Update of the UE from the E-UTRAN to a UTRAN or a GERAN occurs, the key derivation module may derive keys for the UTRAN or the GERAN by using the predefined parameters.

Further, the foregoing system may also have the following characteristics: when the UE transfers from the E-UTRAN to the UTRAN or Handover or Routing Area Update of the UE from the E-UTRAN to the GERAN occurs, the keys derived by the key derivation module include an IK and a CK; and the root key of the E-UTEAN is K_{ASME}.

Further, the foregoing system may also have the following characteristics: the NAS Count is an NAS uplink Count or an NAS downlink Count.

Further, the foregoing system may also have the following characteristics: when the key derivation module derives keys, the predefined parameters are input into a preset one-way key derivation function, and the output of the one-way key derivation function is taken as the keys.

Unrepeated keys can be derived through the method and system for deriving keys provided by the present invention, thereby facilitating effective protection of signaling and/or data and enhancing network security.

### BRIEF DESCRIPTION OF THE DRAWINGS

FIG. 1 is a flow chart illustrating that saved E-UTRAN security keys are enabled when UE transfers from a UTRAN or a GERAN to the E-UTRAN after it first transfers from the E-UTRAN to the UTRAN or the GERAN in the prior art;
FIG. 2 is a flow chart of a key derivation method according to a method embodiment of the present invention;
FIG. 3 is a signaling flow chart of a key derivation method according to Method Embodiment 1 of the present invention;
FIG. 4 is a signaling flow chart of a key derivation method according to Method Embodiment 2 of the present invention; and
FIG. 5 is a signaling flow chart of a key derivation method according to Method Embodiment 3 of the present invention.

### DETAILED DESCRIPTION

The preferred embodiments of the present invention are described below in conjunction with the accompanying drawings. It should be understood that the preferred embodiments described here are intended to illustrate and describe and not to limit the present invention.

The main idea of the present invention is that, when UE transfers from an E-UTRAN to a UTRAN or a GERAN, an MME and the UE derive keys for the UTRAN or the GERAN using predefined parameters. The predefined parameters include a root key K_{ASME} of the E-UTRAN and a value of an NAS Count. Specifically, when the UE transfers from the E-UTRAN to the UTRAN or the GERAN, an IK and a CK are derived using the K_{ASME} and the value of the NAS Count, thereby achieving the goal of deriving different IK and CK. Specifically, the foregoing NAS Count is an NAS uplink Count or an NAS downlink Count. For the UTRAN, it is enough to derive an IK and a CK by using K_{ASME} and a value of the NAS Count; for the GERAN, it is also necessary to further derive a Kc based on the derived IK and CK.

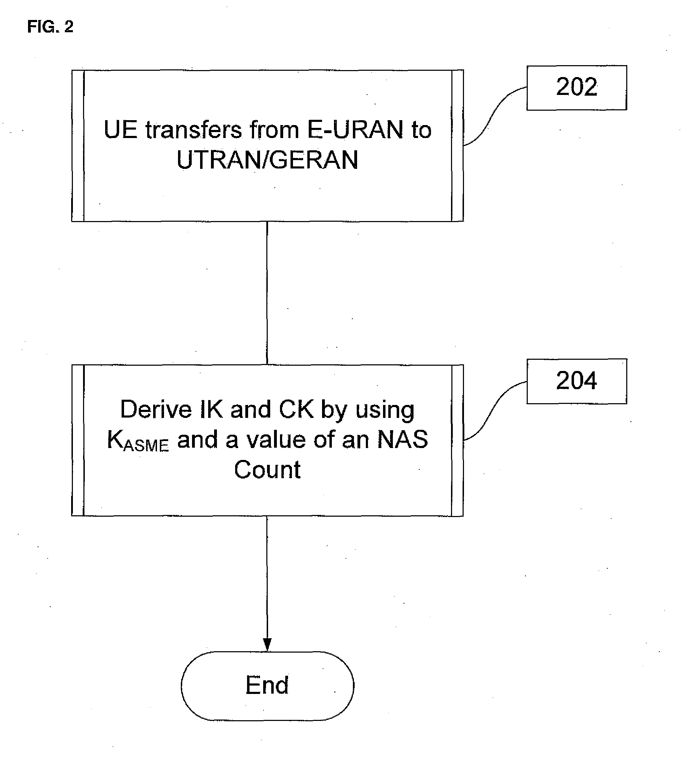

FIG. 2 is a flow chart of a key derivation method according to an embodiment of the present invention, specifically including the following steps:
step 202, UE transfers from an E-UTRAN to a UTRAN or a GERAN;
the "transfer" refers to Handover or Routing Area Update of the UE from the E-UTRAN to the UTRAN or the GERAN;
step 204, an MME and the UE respectively derive an IK and a CK using a root key K_{ASME} of the E-UTRAN and a value of an NAS Count.

Wherein in step 204, the IK and the CK may also be derived by using a root key K_{ASME}, a value of the NAS Count and values of other parameters, and said other parameters may be selected according to the actual condition.

When the UE transfers from the E-UTRAN to the GERAN, a Kc may be further derived based on the IK and the CK after the IK and the CK are derived.

Wherein the operation of deriving keys by using K_{ASME} and a value of the NAS Count, or by using K_{ASME}, a value of the NAS Count and other parameters may specifically include: inputting the root key K_{ASME} and the value of the NAS Count, or the root key K_{ASME}, the value of the NAS Count and other parameters into a preset one-way key derivation function; and taking the output of the one-way key derivation function as the IK and the CK.

According to the key derivation method in the embodiment of the present invention, unrepeated keys can be derived, thus facilitating effective protection of signaling and/or data and enhancing network security. Also, in this embodiment, the keys are derived by using a value of the NAS Count in the E-UTRAN without need of forwarding the value of the NAS Count to the MME, thereby avoiding extra signaling burden.

### Embodiment 1

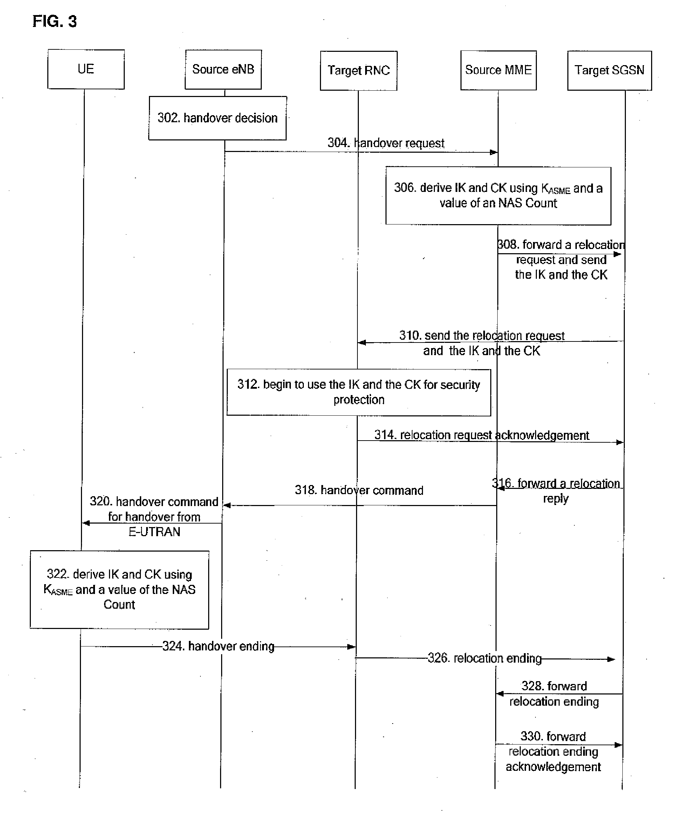

FIG. 3 is a signaling flow chart of a key derivation method according to Embodiment 1 of the present invention. This embodiment illustrates a flow chart of a key derivation method during handover of UE from an E-UTRAN to a UTRAN, including the following steps:
step 302, a source eNB makes a handover decision;
step 304, the source eNB sends a handover request to a source MME;
step 306, the source MME receives the handover request, and derives an IK and a CK using K_{ASME} and a value of an NAS Count;
step 308, the source MME forwards a relocation request to a target SGSN and at the same time sends it the IK and the CK;
step 310, the target SGSN sends a target Radio Network Controller (RNC) the relocation request and the IK and CK at the same time;
step 312, the target RNC begins to use the IK and the CK;
step 314, the target RNC sends a relocation request acknowledgment to the target SGSN;
step 316, the target SGSN forwards a relocation reply to the source MME;
step 318, the source MME sends a handover command to the source eNB;
step 320, the source eNB sends the U E a handover command for handover from the E-UTRAN;
step 322, the UE receives the message above, and derives an IK and a CK using K_{ASME} and a value of the NAS Count;
step 324, the UE sends a handover ending message to the target RNC;
step 326, the target RNC sends a relocation ending message to the target SGSN;
step 328, the target SGSN forwards the relocation ending message to the source MME; and
step 330, the source MME forwards a relocation ending acknowledgment message to the target SGSN.

By means of the key derivation method provided by this embodiment, keys are derived by adopting a value of the NAS Count and K_{ASME}, thus overcoming the defects of the prior art that repeated IK and CK may be derived during handover of the UE from the E-UTRAN to the UTRAN, and enhancing security protection.

### Embodiment 2

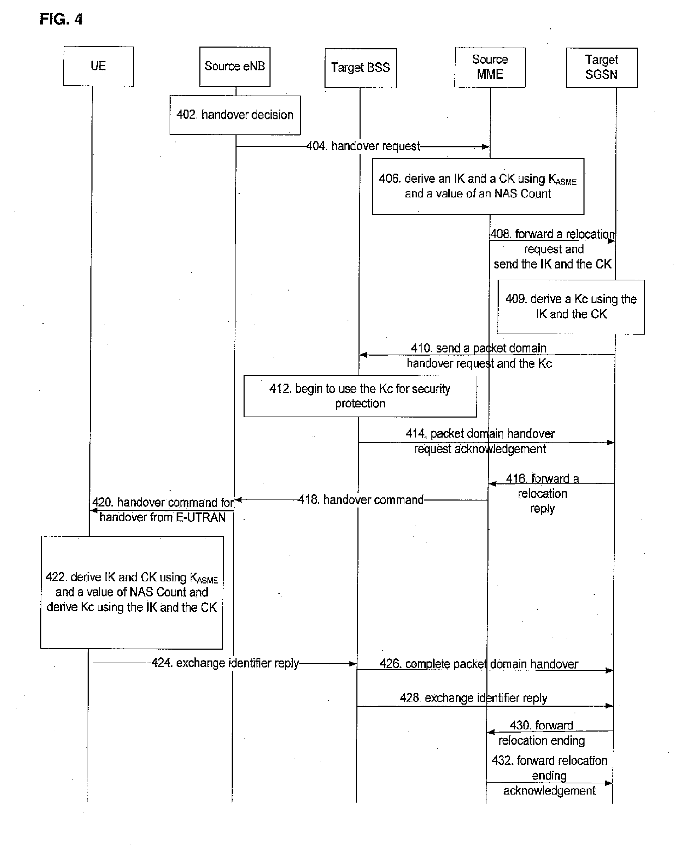

FIG. 4 is a signaling flow chart of a key derivation method according to Embodiment 2 of the present invention. This embodiment illustrates a flow chart of a key derivation method during handover of UE from an E-UTRAN to a GERAN, including:
step 402, a source eNB initiates a handover decision;
step 404, the source eNB sends a handover request to a source MME;
step 406, the source MME derives an IK and a CK using K_{ASME} and a value of an NAS Count;
step 408, the source MME forwards a relocation request to a target SGSN, and at the same time sends it the IK and the CK;
step 409, the target SGSN derives a Kc using the IK and the CK;
step 410, the target SGSN sends a target BSS a packet domain handover request and the Kc at the same time;
step 412, the target BSS may begin the use of the Kc for security protection;
step 414, the target BSS sends a packet domain handover request acknowledgement to the target SGSN;
step 416, the target SGSN forwards a relocation reply to the source MME;
step 418, the source MME sends a handover command to the source eNB;
step 420, the source eNB sends the UE a handover command for handover from the E-UTRAN;
step 422, the UE derives an IK and a CK using K_{ASME} and a value of the NAS Count, then derives a Kc based on the IK and the CK, and applies the Kc to its security protection;
step 424, the UE sends an exchange identifier reply to the target BSS;
step 426, the target BSS sends a packet domain handover completion message to the target SGSN;
step 428, the target BSS sends an exchange identifier reply message to the target SGSN;
step 430, the target SGSN forwards a relocation ending message to the source MME; and
step 432, the source MME forwards a relocation ending acknowledgement message to the target SGSN.

In the key derivation process of the foregoing embodiment, a value of the NAS Count and K_{ASME} may be used as input parameters, and alternatively, a value of the NAS Count, K_{ASME} and other parameters may be also used as input parameters, and keys are derived by adopting a one-way key derivation function. Said other parameters may be selected according to the actual condition. For the sake of simplicity, said other parameters are not chosen in this embodiment. Those skilled in the art should understand that said other parameters are not limited to none and this does not affect the essence of the embodiment of the present invention.

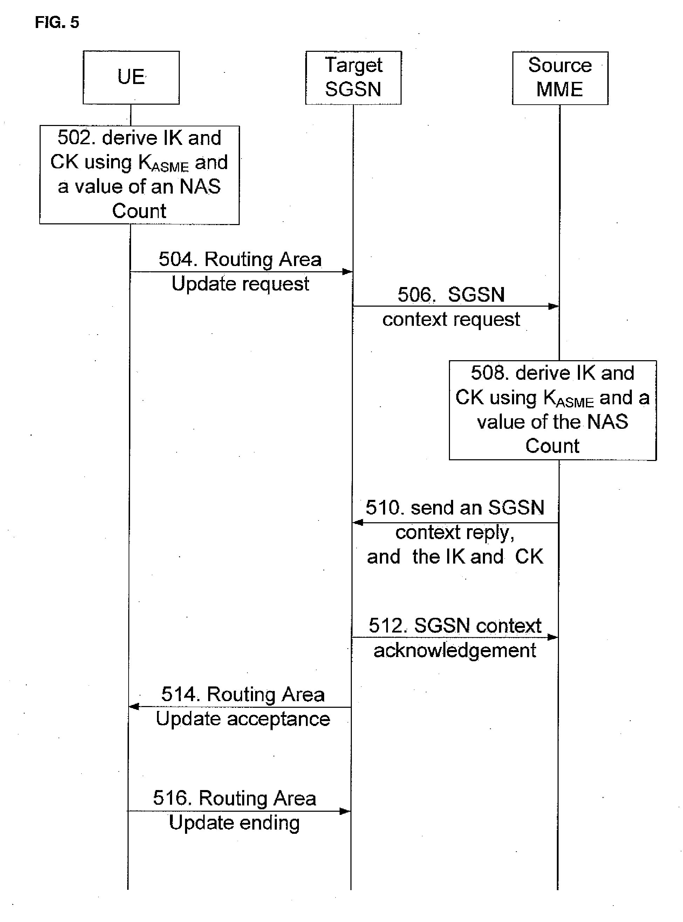

FIG. 5 is a signaling flow chart of a key derivation method according to Embodiment 3 of the present invention. This embodiment exemplifies a flow chart of a key derivation method during Routing Area Update of UE from an E-UTRAN to a UTRAN, including:
step 502, UE derives an IK and a CK using K_{ASME} and a value of an NAS Count;
step 504, the UE sends a Routing Area Update request to a target SGSN;.
step 506, the target SGSN sends an SGSN context request to a source MME;
step 508, the source MME derives an IK and a CK using K_{ASME} and a value of the NAS Count;
step 510, the source MME sends the target SGSN an SGSN context reply and the IK and CK at the same time;
step 512, the target SGSN sends an SGSN context acknowledgement message to the source MME;
step 514, the target SGSN sends a Routing Area Update acceptance message to the UE; and
step 516, the UE sends a Routing Area Update ending message to the target SGSN.

In the key derivation process of the foregoing embodiment, the UE may derive an IK and a CK either before the sending of a Routing Area Update request, or after the receiving of a Routing Area Update acceptance message, or at other time. For the sake of simplicity, the IK and the CK are derived before the sending of a Routing Area Update request in this embodiment. Those skilled in the art should understand that the IK and the CK may also be derived in other steps and this does not affect the essence of the embodiment of the present invention.

A key derivation method for Routing Area Update of UE from an E-UTRAN to a GERAN is similar to the method in the foregoing embodiment, the difference is that: after an MME receives a Routing Area Update request, derives an IK and a CK and sends the IK and the CK to a target SGSN, the target SGSN is further required to derive a Kc based on the IK and the CK; after the UE derives an IK and a CK, it is necessary for the UE to further derive a Kc based on the IK and the CK.

The present invention also provides a system for deriving keys. The system comprises a key derivation module. The key derivation module derives keys using predefined parameters. The predefined parameters include a root key of an E-UTRAN and a value of an NAS Count. Alternatively, keys may also be derived by using a root key, a value of the NAS Count and other parameters selected according to requirement. The key derivation module is located in UE and/or an MME.

Wherein when the UE transfers from an E-UTRAN to a GERAN or a UTRAN, the key derivation module may derive keys IK and CK for the GERAN or the UTRAN either by using a root key and a value of the NAS Count, or by using a root key, a value of the NAS Count and other parameters. Wherein when the UE transfers to the GERAN, the key derivation module derives an IK and a CK and sends the IK and the CK to a target SGSN in the GERAN, and then the SGSN derives a Kc based on the IK and the CK. The UE transferring from an E-UTRAN to a GERAN or a UTRAN refers to Handover or Routing Area Update of the UE from the E-UTRAN to the UTRAN or the GERAN.

Wherein when the key derivation module derives keys, the predefined parameters are input into a preset one-way key derivation function, and the output of the one-way key derivation function is taken as the keys.

The present invention also provides UE and an MME, which comprise the foregoing key derivation module.

Apparently, those skilled in the art should understand that in the foregoing embodiments, a value of an NAS Count is an initial value 0 when the NAS Count is initialized, and it is a current value of the NAS Count after the initialization.

Apparently, those skilled in the art should understand that in the foregoing embodiments, the NAS Count may be either an NAS uplink Count or an NAS downlink Count.

Apparently, those skilled in the art should understand that the foregoing modules or steps in the present invention may be realized by general computing devices. Those modules or steps may be concentrated in a single computing device, or distributed in a network comprising a plurality of computing devices. Optionally, those modules or steps may be realized with the program codes executable by the computing devices, thereby those modules or steps can be stored in a storage device and executed by a computing device; or those modules or steps may be realized by making them into single integrated circuit modules respectively, or by making some of them into a single integrated circuit module. Thus, the present invention is not limited to any specific combination of hardware and software.

The foregoing descriptions are preferred embodiments of the present invention and are not intended to limit the present invention. For those skilled in the art, the present invention may have various changes and modifications. All modifications, equivalent substitutes and improvements made without departing from the spirit and principle of the present invention shall be within the protection scope of the present invention.

### INDUSTRIAL APPLICABILITY

According to the key derivation methods and systems in the present invention, keys are output by using a value of an NAS Count and K_{ASME}, which facilitates effective protection of signaling and/or data in the access stratum and enhances the security of the access stratum. Also, there is no need to forward the value of the NAS Count to an MME, so extra signaling burden is not needed.

## Claims

1. A method for deriving keys comprising: deriving keys for a Universal Terrestrial Radio Access Network (UTRAN) or a Global System for Mobile Communication/Enhanced Data Rate for GSM Evolution Radio Access Network (GERAN) by a Mobility Management Entity (MME) and/or User Equipment (UE) by using predefined parameters when Handover or Routing Area Update of the UE from an Evolved Universal Terrestrial Radio Access Network (E-UTRAN) to the UTRAN or the GERAN occurs, wherein the predefined parameters include a root key of the E-UTEAN (K_{AMSE}) and a value of a Non Access Stratum (NAS) Count.

2. The method of claim 1, wherein the NAS Count is an NAS uplink Count or an NAS downlink Count.

3. The method of claim 1, wherein when Handover or Routing Area Update of the UE from the E-UTRAN to the UTRAN occurs, the derived keys include an Integrity Key (IK) and a Confidentiality Key (CK); or when Handover or Routing Area Update of the UE from the E-UTRAN to the GERAN occurs, the derived keys include an IK and a CK, further, a Confidentiality Key (Kc) is derived based on the derived IK and CK, and the root key of the E-UTEAN is Key Access Security Management Entity (K_{ASME}).

4. The method of claim 1 or 2 or 3, wherein when keys are derived, the predefined parameters are input into a one-way key derivation function, and the output of the one-way key derivation function is taken as the keys.

5. The method of claim 1 or 2 or 3, wherein when Handover of the UE from the E-UTRAN to the UTRAN or the GERAN occurs, the MME derives keys using the predefined parameters after receiving a handover request, and/or, the UE derives keys using the predefined parameters after receiving a handover command for handover from the E-UTRAN.

6. The method of claim 1 or 2 or 3, wherein when Routing Area Update of the UE from the E-UTRAN to the UTRAN or the GERAN occurs, the following steps is executed:
the UE derives keys using the predefined parameters; and/or,
the MME receives a Routing Area Update request from the UE and then derives keys using the predefined parameters.

7. A system for deriving keys, comprising a key derivation module for deriving keys by using predefined parameters, wherein the predefined parameters include a root key of an Evolved Universal Terrestrial Radio Access Network (E-UTEAN) and a value of a Non Access Stratum (NAS) Count.

8. The system of claim 7, wherein the key derivation module is located in User Equipment (UE) and/or a Mobility Management Entity (MME), and derives keys for a Universal Terrestrial Radio Access Network (UTRAN) or a Global System for Mobile Communication/Enhanced Data Rate for GSM Evolution Radio Access Network (GERAN) by using the predefined parameters when Handover or Routing Area Update of the UE from the E-UTRAN to the UTRAN or the GERAN occurs.

9. The system of claim 8, wherein when transfer of the UE from the E-UTRAN to the UTRAN or Handover or Routing Area Update of the UE from the E-UTRAN to the GERAN occurs, the keys derived by the key derivation module include an IK and a CK; and the root key of the E-UTEAN is Key Access Security Management Entity (K_{ASME}).

10. The system of claim 7 or 8 or 9, wherein the NAS Count is an NAS uplink Count or an NAS downlink Count.

11. The system of claim 7, wherein when the key derivation module derives keys, the predefined parameters are input into a preset one-way key derivation function and the output of the one-way key derivation function is taken as the keys.
